# EUROPEAN PATENT APPLICATION

(11) **EP 1 798 863 A1**
(43) Date of publication of application: **20.06.2007**
(21) Application number: 05112321.4
(22) Date of filing: 16.12.2005
(51) Int. Cl.: H04B 1/10, H04B 1/707

(54) **Method and device for communicating signals over first and second channel types with counteraction of interference during time periods when simultaneous transmission of the first and second channel types is predicted**

(71) Applicant: TELEFONAKTIEBOLAGET LM ERICSSON (publ), 164 83 Stockholm (SE)
(72) Inventor: Haartsen, Jacobus, NL-7772, BG Hardenberg (NL); Edvardsson, Maria, 177 70 Järfälla (SE); Dahlman, Erik, 168 68 Bromma (SE); Parkvall, Stefan, SE-11322 Stockholm (SE)
(74) Representative: Asketorp, Göran

(57) **Abstract**

A communication unit (10, 20, 40) and a method for communicating at least one signal over a channel of a first channel type and at least one signal over a channel of a second channel type, which is different from the first channel type. The apparatus comprises a timer (19, 30, 50) adapted to schedule a predetermined time period, during which interference due to simultaneous communication of signals over the channel of the first channel type and the channel of the second channel type is anticipated. Also, the apparatus comprises a processing unit (16, 29, 49) adapted to apply, during the predetermined time period, an interference counteracting process for counteracting interference between any signal communicated over the channel of the first channel type and any signal communicated over the channel of the second channel type.

## Description

### Technical Field of the Invention

The present invention relates to a method and an electronic apparatus for communicating signals over a first and a second type of channel simultaneously.

### Description of Related Art

In a radio communication system, such as a mobile telecommunication system, the radio network may have control over a mobile terminal. Uplink transmission parameters, such as frequency, timing, and transmit power, may be regulated via downlink control signaling from a base station of the radio network to the mobile terminal.

In order for the base station to control uplink transmission parameters, an uplink connection may have to be established between the base station and the mobile terminal. The base station may e.g. perform measurements on the uplink connection to establish the uplink transmission parameters. However, when the mobile terminal e.g. is in standby mode, it may only need to listen to downlink control signals periodically without any need of an uplink connection. If no uplink connection is established, the base station cannot e.g. perform any measurements on the uplink, and the mobile terminal cannot send any traffic data. Thus, an uplink connection may have to be established for various reasons. For establishing the uplink connection, the mobile terminal may have to carry out an access procedure, such as a random access (RA) procedure, together with the network.

A random access channel (RACH) may be provided for transmission of a random access request from the mobile terminal to the base station. A random access burst may be used, which has a specific bit sequence. The RACH can be orthogonal to traffic channels (TCH) i.a. to reduce interference therebetween. For example, in GSM (Global System for Mobile communication) telecommunication system, a special RACH slot is defined. Because multiple mobile terminals may request access at the same time, collisions between access requests from requesting mobile terminals may occur, which causes interference between the colliding requests. A contention resolution scheme may be used to separate access requests from mobile terminals, for which the collisions occurred. The contention resolution scheme may comprise a random back off procedure, which may introduce latency and reduce the transmission rate of traffic data.

In a WCDMA (Wideband Code Division Multiple Access) telecommunication network, the frequency band of the RACH is shared with the frequency band of the uplink TCHs. Also, access requests as well as data traffic may be transmitted at any time over said channels. Therefore, in addition to interference between signals for multiple access requests, the base station as well as the mobile terminal may experience interference between signals for traffic data transmitted on multiple uplink TCHs, and between signals for access requests and traffic data.

In WCDMA, the transmit power is a shared radio resource, i.e. the transmit power used for transmission on the TCHs influences transmissions on the RACH, and vice versa. In order to avoid near-far problems, the power of signals received at the base station from multiple mobile terminals has to be approximately equal. Therefore, a transmit power scheme may be applied. To prevent that a random access burst transmitted over the RACH saturates the receiver of the base station, the mobile terminal may start transmitting the random access burst at a relatively low transmit power level. If no access is granted in response to an access request, the mobile terminal retransmits the random access burst using a slightly higher transmit power. The mobile terminal continues to increase the transmit power for the random access burst until access grant is received.

Also non-WCDMA radio communication systems may use a RACH sharing the frequency band with the frequency band of the TCHs. One problem with shared frequency band for the RACH and the TCHs and with simultaneous transmissions on the RACH and the TCHs is mutual interference. Mutual interference may also require transmit power control for retransmissions. Each retransmission may introduce latency and consume additional power. If the transmit power for the access request starts at a relatively low level and only increases in small steps for retransmissions, considerable latency may result.

The problems described above may not only be present for access requests, but also for other periodic events, which are communicated on a channel other than the traffic channel. For example, the mobile terminal may have to periodically send an uplink burst as a sign-of-life indication (ping signal). Similarly, periodic events in the downlink may lead to problems with interference.

### Summary of the Invention

It is an object of the invention to provide a method and an apparatus with increased efficiency.

According to an embodiment, a method for communicating at least one signal over a channel of a first channel type and at least one signal over a channel of a second channel type, which is different from the first channel type, said channels being channels of a wireless communication system, comprises, scheduling a predetermined time period, during which interference due to simultaneous communication of signals over the channel of the first channel type and the channel of the second channel type is anticipated. The method also comprises applying, during the predetermined time period, an interference counteracting process for counteracting interference between any signal communicated over the channel of the first channel type and any signal communicated over the channel of the second channel type.

The step of scheduling may comprise determining a start time and an end time of the predetermined time period.

The interference counteracting process may comprise an interference cancellation process.

The interference counteracting process may comprise determining whether a received composite signal comprises any signal communicated over the channel of the second channel type. Also, the interference counteracting process may comprise removing any signal, which has been communicated over the channel of the second channel type, from the composite signal.

The interference counteracting process may comprise applying a correlation process for detecting correlation between the composite signal and a spreading sequence by using at least one spreading sequence dedicated for the communication of signals over the channel of the second channel type. Also, the interference counteracting process may comprise regenerating a signal based on a spreading sequence, for which correlation was detected, and an associated estimated power level. Then, the regenerated signal may be subtracted from the composite signal.

The interference counteracting process may comprise determining that all signals communicated over the channel of the second channel type have been removed from the composite signal. Also, the interference counteracting process may comprise demodulating a TCH frame, which is comprised in a signal communicated over the channel of the first channel type. The composite signal may comprise the signal communicated over the channel of the first channel type.

The interference counteracting process may comprise a link adaptation process.

The interference counteracting process may comprise changing from first link parameter settings to second link parameter settings for increasing the robustness of channels of the first channel type.

The step of changing comprises at least one of changing from a first modulation scheme to a second modulation scheme during the predetermined time period, said second modulation scheme being more robust than the first modulation scheme; changing from a first coding scheme to a second coding scheme during the predetermined time period, said second coding scheme being more robust than the first coding scheme; changing from first settings for coding gain to second settings for coding gain during the predetermined time period, said second coding gain settings adding robustness to the channel of the first channel type; changing from first settings for processing gain to second settings for processing gain during the predetermined time period, said second processing gain settings adding robustness to the channel of the first channel type; and changing from a first transmit power level to a second transmit power level, said second transmit power level being higher than the first transmit power level.

The step of scheduling may comprise scheduling when interference from a base station of at least one cell, which is adjacent a serving cell, is anticipated.

According to another embodiment, a communication unit for communicating at least one signal over a channel of a first channel type and at least one signal over a channel of a second channel type, which is different from the first channel type, said channels being channels of a wireless communication system, comprises a timer adapted to schedule a predetermined time period, during which interference due to simultaneous communication of signals over the channel of the first channel type and the channel of the second channel type is anticipated. The communication unit also comprises a processing unit adapted to apply, during the predetermined time period, an interference counteracting process for counteracting interference between any signal communicated over the channel of the first channel type and any signal communicated over the channel of the second channel type.

The timer may be adapted to determine a start time and an end time of the predetermined time period.

The interference counteracting process may be an interference cancellation process.

The processing unit may be adapted to determine whether a received composite signal comprises any signal communicated over the channel of the second channel type. The communication unit may comprise a subtractor adapted to remove any signal, which has been communicated over the channel of the second channel type, from the composite signal.

The processing unit may comprise a correlator adapted to apply a correlation process to the composite signal for determining correlation between the composite signal and a spreading sequence by using at least one spreading sequence dedicated for communication of signals over the channel of the second channel type. The processing unit may also comprise a power estimator adapted to estimate a power level associated with a spreading sequence for which correlation was detected. The processing unit may be adapted to regenerate a signal based on the spreading sequence, for which correlation was detected, and the associated estimated power level. The subtractor may be adapted to subtract the regenerated signal from the composite signal.

The processing unit (may be adapted to determine that all signals communicated over the channel of the second channel type have been removed from the composite signal. The communication unit may comprise a demodulator adapted to demodulate a TCH frame, which is comprised in a signal communicated over the channel of the first channel type. The composite signal may comprise the signal communicated over the channel of the first channel type.

The interference counteracting process may be a link adaptation process.

The processing unit may be adapted to control a change from first link parameter settings to second link parameter settings for increasing the robustness of channels of the first channel type.

The processing unit may be adapted to control, e.g. when it is comprised in a receiver unit, at least one of: a signal demodulator to change from a first modulation scheme to a second modulation scheme during the predetermined time period, said second modulation scheme being more robust than the first modulation scheme; an FEC decoder to change from a first coding scheme to a second coding scheme during the predetermined time period, said second coding scheme being more robust than the first coding scheme; the FEC decoder to change from first settings for coding gain to second settings for coding gain during the predetermined time period, said second coding gain settings adding robustness to the channel of the first channel type; and a de-spreader to change from first settings for processing gain to second settings for processing gain during the predetermined time period, said second processing gain settings adding robustness to the channel of the first channel type.

The processing unit may be adapted to control, e.g. when it is comprised in a transmitter unit, at least one of: a signal modulator to change from a first modulation scheme to a second modulation scheme during the predetermined time period, said second modulation scheme being more robust than the first modulation scheme; an FEC encoder to change from a first coding scheme to a second coding scheme during the predetermined time period, said second coding scheme being more robust than the first coding scheme; the FEC encoder to change from first settings for coding gain to second settings for coding gain during the predetermined time period, said second coding gain settings adding robustness to the channel of the first channel type; and a spreader to change from first settings for processing gain to second settings for processing gain during the predetermined time period, said second processing gain settings adding robustness to the channel of the first channel type.

The processing unit may be adapted to control a power amplifier to change from a first transmit power level to a second transmit power level, said second transmit power level being higher than the first transmit power level.

The timer may be adapted to schedule when interference from a base station of at least one cell, which is adjacent a serving cell, is anticipated.

According to another embodiment, a communication device comprises the communication unit.

The communication device may be a portable or handheld mobile radio communication equipment, a mobile radio terminal, a mobile telephone, a pager, a communicator, an electronic organizer, or a smartphone. Alternatively, the communication device may be a base station.

According to another embodiment, a computer program product comprises computer program code means for executing the method for communicating a signal, when said computer program code means are run by an electronic device having computer capabilities.

According to another embodiment, a computer readable medium having stored thereon a computer program product comprises computer program code means for executing the method for communicating a signal, when said computer program code means are run by an electronic device having computer capabilities.

Further embodiments of the invention are defined in the dependent claims.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of the invention will appear from the following detailed description of embodiments of the invention, reference being made to the accompanying drawings, in which:
Fig. 1 is a schematic view of a communication apparatus and a wireless communication network;
Fig. 2 is a block diagram of an embodiment of a communication unit;
Figs. 3a-3b are block diagrams of embodiments of the communication unit;
Fig. 4 is a timing diagram illustrating scheduling of communication of signals over the first and the second type of channels;
Fig. 5 is a flow-chart of an embodiment of a method for communicating signals over the first and the second type of channels; and
Fig. 6 is a flow-chart of another embodiment of the method for communicating signals over the first and the second type of channels.

### Detailed Description of Embodiments

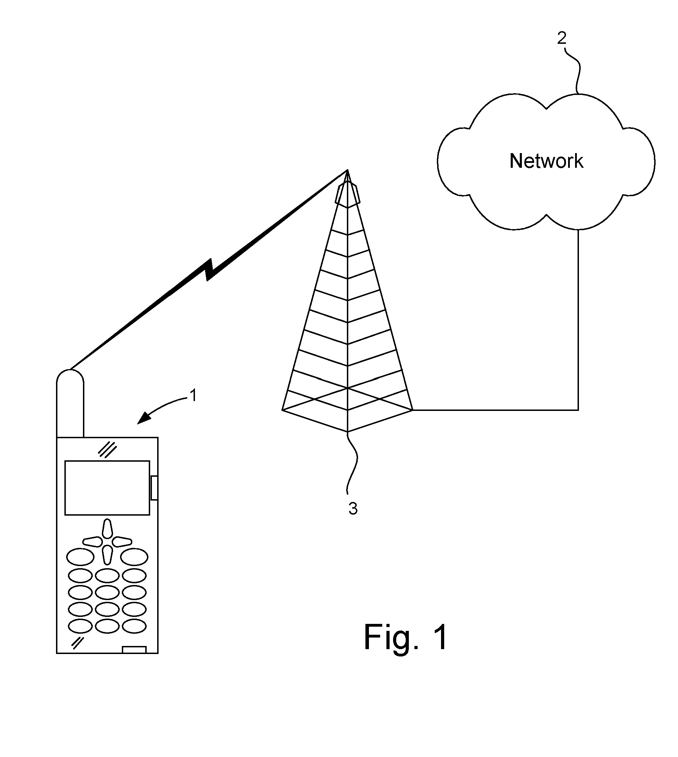

Fig. 1 illustrates a wireless communication apparatus 1, which is adapted to communicate with a communication network 2 through a base station 3. Signals may be communicated in uplinks as well as in downlinks. Traffic data may e.g. be communicated over a channel of a first channel type, such as a traffic channel (TCH). Periodic events may be communicated over a channel of a second channel type, such as a random access channel. A periodic event may e.g. be a sign-of-life indication (ping signal) or an access request, such as a random access (RA) request. Another example of a period signal is a broadcast signal in the downlink to allow the wireless communication apparatus 1 to synchronize to the communication network 2. A synchronization channel may comprise a separate Frequency Control Channel (FCCH) and timing Synchronization Channel (SCH), such as is used in GSM, to allow the wireless communication apparatus 1 to adjust its frequency and symbol/frame timing. Alternatively, a single SCH is used to let the wireless communication apparatus 1 synchronize both in frequency and in time. Characteristic of the SCH is that known signal sequences are used. The unsynchronized wireless communication apparatus 1 just has to search for the known patterns.

Signals may be communicated at least partially simultaneously over the channel of the first channel type and the channel of the second channel type. Furthermore, the channel of the first channel type need not be orthogonal to the channel of the second channel type. This may cause interference between signals transmitted over the channels of the first channel type and the channel of the second channel type.

The periodic event may only be communicated over the second type of channel during predetermined time periods that may be scheduled in time. However, signals may be communicated over the channel of the first channel type at any time. Therefore, it has been realized according to the invention that interference between signals communicated over the channel of the first channel type and the channel of the second channel type may only occur during the predetermined time periods when simultaneous communication occurs. Consequently, it may be anticipated and scheduled when said interference is predicted to occur. To counteract said interference and take preventive action, an interference counteracting process is applied during the predetermined time periods of possible simultaneous communication. Between the predetermined time periods, signals may be communicated without applying the interference counteracting process.

It is an advantage to apply the interference counteracting process during the predetermined time period of possible simultaneous communication, as interference is counteracted only when it is anticipated. Outside the predetermined time period, traffic will be unaffected, wherein transmission efficiency is improved. Also, it will be possible to have an at least partly overlapping frequency band for the channel of the first channel type with the frequency band of the channel of the second channel type, which e.g. makes the frequency allocation efficient. Furthermore, reduced interference reduces delay for periodic events, as the number of retransmissions for the periodic events will be reduced. Thus, efficiency will be improved both in terms of latency and power consumption. Less interference may also reduce the need for retransmissions over the traffic channel. Thus, the delay in the traffic channel will be reduced, which results in improved transmission efficiency. Also, the reduced interference improves robustness of periodic events.

In the following, reference will be made to an access request as an example of a periodic event. However, the invention is not limited to an access requests, but could be implemented for any periodic event transmitted over a channel, which is different from the traffic channel. Furthermore, reference will be made to traffic channels (TCH) as an example of a channel of the first channel type. Also, reference will be made to a random access channel (RACH) as an example of a channel of the second channel type. However, the invention is not limited to TCHs and a RACH, but could be implemented for simultaneous communication of signals over channels, which are different, of any type. Reference will also be made in the following to an access window as an example of a predetermined time period, during which simultaneous communication of signals over the channels of the first and second types may occur. However, the invention is not limited to access windows but could be applied for any time periods that are predetermined and may be scheduled in time. For example access windows applied by base stations of cells, which are adjacent to a serving cell in which the communication unit 10 is located, may be scheduled. Thus, the interference counteracting may be applied also in the adjacent cells.

As an example, if the periodic event is an access request, the predetermined time period may be an access window.

The interference counteracting process may comprise an interference cancellation process. The interference counteracting process may in addition or alternatively comprise a link adaptation process. Thus, the interference counteracting process may comprise at least one of the interference cancellation process and the link adaptation process. The interference counteracting process may thus in some embodiments comprise a combination of the interference cancellation process and the link adaptation process

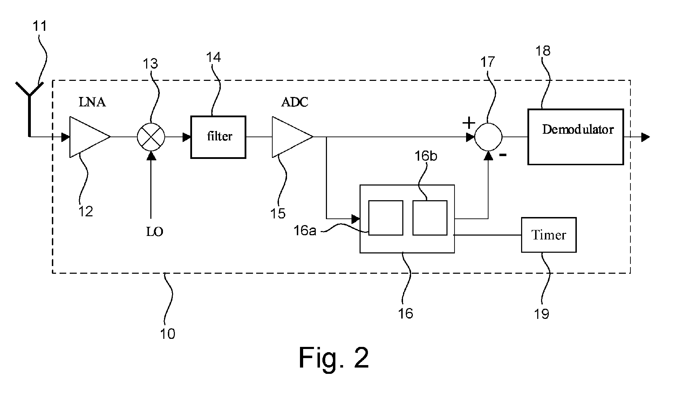

Fig. 2 illustrates an embodiment of a communication unit 10, which is adapted to apply a first embodiment of the interference counteracting process. The communication unit 10 may be comprised in the electronic communication apparatus 1. Alternatively or additionally, the communication unit 10 may be comprised in the communication network 2, such as in the base station 3. If periodic events are communicated in the uplink, the communication unit may be comprised in the communication network 2. If periodic events are communicated in the downlink, the communication unit 10 may be implemented in the communication apparatus 1. The base station 3 is not necessarily in the serving cell of communication unit 10. The proposed cancellation technique works equally well in adjacent base stations.

The communication unit 10 may have an input terminal connected to an antenna 11. Furthermore, the communication unit may comprise an LNA (Low Noise Amplifier) 12, a mixer 13, a filter 14, an ADC (Analog to Digital Converter) 15, a processing unit 16, a subtractor 17, a demodulator 18, and a timer 19. The processing unit 16 is connected to an output terminal of the ADC 15 and to a first input terminal of the subtractor 17. The output terminal of the ADC 15 is also connected to a second input terminal of the subtractor 17. An input terminal of the demodulator 18 is connected to an output terminal of the subtractor 17.

During the access windows, signals may be transmitted over the RACH as well as over the TCHs. Therefore, a signal received by the antenna 11 during an access window may be a composite signal. The composite signal may comprise signals having been communicated over both the RACH and the TCHs. Interference between the signal transmitted over the RACH and a signal transmitted over the TCHs may according to this embodiment be cancelled to counteract interference. Consequently, the interference counteracting process may be an interference cancellation process.

The timer 19 is adapted to determine or schedule the access windows. For example the timer may schedule the start time and end time of the access window. Timer 19 may be comprised in the processing unit 16 or as a stand-alone unit. Also, the timer 19 may be is adapted to schedule when interference from base stations of at least one cell, which is adjacent a serving cell, is anticipated.

After analog to digital conversion of the received composite signal in ADC 15, it is determined whether the composite signal comprises any signal transmitted over the RACH. Any signal transmitted over the RACH may be obtained from the composite signal by the processing unit 16. The determination whether the composite signal comprises the any signal transmitted over the RACH may be made by a correlator unit 16a comprised in the processing unit 16. Also, any signal transmitted over the RACH may be obtained by the correlator unit 16a, e.g. if the signal is transmitted using a CDMA (Code Division Multiple Access technique) a TDMA (Time Division Multiple Access) or FDMA (Frequency Division Multiple Access) communication technique. In FDMA/TDMA, known bit sequences are used in the RA burst, on which correlator unit 16a can correlate. Usually, the RA burst contains a known preamble acting as a training sequence or synchronization sequence. The received signal may be correlated against this known training sequence in order to detect the presence of the RA signal. The correlator unit 16a has stored all possible spreading sequences that may be used at the transmitter side for transmitting the access request over the RACH. The number of possible spreading sequences may be relatively limited, such as 10-20. The correlator unit 16a may sequentially search the composite signal using each possible spreading sequence for signals to be communicated over the RACH. The spreading sequences for the access request are accessible by the processing unit 16 and may be stored in a memory (not shown). If the processing unit 16 detects correlation between the composite signal and a certain spreading sequence, the signal strength of the signal found is estimated by a signal strength estimator 16b.

The composite signal may comprise of a fixed training sequence, which is known to the correlator unit 16a, and the (unknown) traffic. The correlator 16a is matched to the known sequence. The output of the correlator 16a is the auto-correlation function for the known sequence (which is at maximum when there is full correlation) and the cross-correlation function of the known sequence and the traffic. Normally, the cross-correlation should be very low. Therefore at the moment of full correlation, the contribution of the cross-correlation induced by the traffic part is minor. Thus, the training sequence has a processing gain over the traffic caused by the matched correlator 16a. The correlator output at full correlation is therefore a good estimate of the strength of the training sequence. Thus, the signal strength estimator 16b may determine the signal strength of the signal found by the correlator unit 16a from the output of the correlator unit 16a.

The signal strength estimator 16b may be comprised in the processing unit 16. The processing unit 16 is also adapted to regenerate any signal communicated over the RACH. When a signal communicated over the RACH has been found, i.e. correlation for a specific spreading sequence has been detected, and its signal strength been estimated, that signal may be regenerated. The signal found may be regenerated using the spreading sequence for which correlation with the composite signal was detected and its associated estimated signal strength. Then, the regenerated signal is forwarded to the subtractor, which subtracts it from the composite signal. When correlation for a specific spreading sequence has been finalized, the correlator unit 16a iteratively searches for correlation using another spreading sequence. The procedure is repeated until correlation with all possible spreading sequences has been checked and all signals found have been subtracted. Consequently, interference caused by signals communicated over the RACH is cancelled from the composite signal. When the composite signal has been searched for correlation with all possible spreading sequences for the access request, and all signals communicated over the RACH have been found and subtracted from the composite signal, the subtractor may output an interference filtered signal. The interference filtered signal comprises signals transmitted over the TCHs, but not signals transmitted over the RACH, which have been removed. Consequently, interference between signals transmitted over the RACH and the TCHs have been counteracted. The interference filtered signal may be demodulated by the demodulator 18.

The processing unit 16 is adapted to apply the interference counteracting process during the access window. The processing unit 16 may also be adapted to apply the interference counteracting process for other periodic events and/or for multiple periodic events, for which possible spreading sequences are known.

Optionally, a delay element or delay unit (not shown) may be positioned between the ADC 15 and the subtractor 17. The processing in processing unit 16 may take a certain time. The result of the processing should be subtracted at the proper time from the signal output from the ADC 15. The delay element or delay unit may be adapted to delay the signal output from the ADC 15 a time period corresponding to the processing time in processing unit 16.

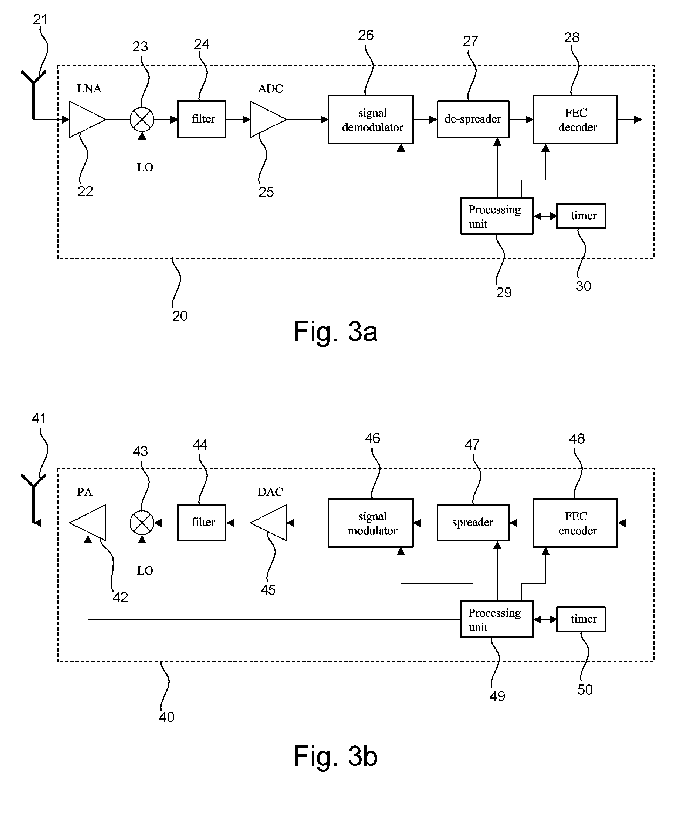

Figs. 3a-3b illustrate another embodiment wherein communication units 20, 40, are adapted to apply the interference counteracting process. In the embodiment of Figs. 3a-3b, the interference counteracting process is a link adaptation process. According to the link adaptation process, communication parameters are adapted at the transmitter as well as at the receiver side during the access window to add robustness to the TCHs. Thus, signals communicated over the TCHs will be less sensitive to interference caused by signals transmitted over the RACH. Consequently, interference between signals transmitted over the TCHs and RACH, respectively will be counteracted.

Communication unit 20 of Fig. 3a may be a receiver unit. Communication unit 20 may be connected to an antenna 21 and comprise an LNA 22, a mixer 23, a filter 24, an ADC 25, a signal demodulator 26, a de-spreader 27, an FEC (Forward Error Correction) decoder 28, a processing unit 29, and a timer 30.

Communication unit 40 of Fig. 3b may be a transmitter unit. Communication unit 40 may be connected to an antenna 41 and comprise an PA (Power Amplifier) 42, a mixer 43, a filter 44, a DAC (Digital to Analog Converter) 45, a signal modulator 46, a spreader 47, an FEC (Forward Error Correction) encoder 48, a processing unit 49, and a timer 50.

If the access request is transmitted in the uplink, communication unit 20 may be implemented in the communication network 2, such as in the base station 3, and communication unit 40 may be implemented in the communication apparatus 1. If the access request is transmitted in the downlink, communication unit 20 may be implemented in the communication apparatus 1 and communication unit 40 may be implemented in the communication network 2, such as in the base station 3. Thus, each of communication units 20, 40 may be implemented in a communication device. The communication device may be the communication apparatus 1 or the base station 3.

Processing unit 29 and processing unit 49 are adapted to control other units to change communication parameters at predetermined points in time and during the access window. Timers 30 and 50 are adapted to schedule the points in time when the change of communication parameters should occur and thus determine or schedule the start time and end time of the access window. Also, timers 20 and 50 may be adapted to schedule when interference from a base station of at least one cell, which is adjacent a serving cell, is anticipated.

Processing unit 29 may be adapted to control at least one of the signal demodulator 26, the de-spreader 27, and the FEC decoder 28.

Processing unit 49 may be adapted to control at least one of the PA 42, the signal modulator 46, the spreader 47, and the FEC encoder 48.

The signal demodulator 26 and the signal modulator 46 may be controlled to change from a first modulation scheme to a second modulation scheme during the access window. The second modulation scheme is more robust than the first modulation scheme. For example, a first modulation scheme applied outside the access window may be 64-QAM (Quadrature Amplitude Modulation). The second modulation scheme may be 16-QAM, which may be applied during the access window. Alternatively, 16-QAM is applied outside the access window. Then, a more robust modulation scheme may be QPSK (Quadrature Phase Shift Keying), which may be applied during the access window.

The de-spreader 27 and the spreader 47 may be controlled to change from a first processing gain to a second processing gain, which adds robustness to the channels of the first channel type, during the access window. For example, settings for the processing gain may e.g. be changed by increasing the spreading factor, or take account of increased spreading factor, i.e. the ratio between transmission bandwidth and information rate, during the access window. The spreading factor applied/taken account of during the access window may be higher compared to the spreading factor applied outside the access window, wherein robustness is added to the TCHs.

The FEC decoder 28 and the FEC encoder 48 may be controlled to change from a first coding/encoding scheme to a second coding/encoding scheme, which adds robustness to the TCHs, during the access window. A first coding scheme applied outside the access window may be a 1/2-rate convolutional scheme, whereas a second more robust coding scheme applied during the access window may be a 1/3-rate convolution coding scheme. Alternatively, a first coding scheme applied outside the access window may be a fixed coding convolutional coding scheme with a certain puncturing, whereas a second more robust coding scheme applied during the access window may be a fixed coding convolutional coding scheme with less or no puncturing in the second coding scheme (less puncturing will effectively increase the rate of the coding scheme and is therefore less robust).

The FEC decoder 28 and the FEC encoder 48 may additionally or alternatively be controlled to change from first settings for coding gain to second settings for coding gain during the access window. Settings for the coding gain may e.g. be changed by changing, or taking account of, the number of parity bits and/or changing, or taking account of changed, coding rate.

The PA 42 may be controlled to change the setting of the transmit power from a first value to a second value, which is higher than the first value, during the access window. Thus, the signals communicated over the TCHs with the second transmit power value will be less sensitive to interference, and the TCHs are thus more robust.

Values for the link parameter settings may be stored centrally in a memory. Alternatively, said settings are stored in each unit, in which the settings should be applied.

The first and second settings are changed relative each other. Thus, the link parameters within the access window are determined based on the link parameter settings outside the access window. During the access window, the settings for the link parameters may be selected in a delta fashion, i.e. changed by a factor 2. As transmission conditions may change over time, the settings may be different for subsequent access windows. However, the settings will be changed to add robustness each time an access window is initiated. Outside the access window, the settings for the link parameters may be selected e.g. based on range and intra-cell/inter-cell interference. When the most robust settings already applied outside the access window, the same settings will be applied also during the access window.

The processing unit 16, processing unit 29, processing unit 49, timer 19, timer 30, and timer 50 may be implemented as hardware units, e.g. as ASICs (Application specific Integrated Circuit). Alternatively, processing unit 16, processing unit 29, processing unit 49, timer 19, timer 30, and timer 50 are implemented by software run by a processor. In still other embodiments, any of processing unit 16, processing unit 29, processing unit 49, timer 19, timer 30, and timer 50 is implemented by a combination of hardware and software.

The access request can be predicted in time, as it may only be transmitted during the access window. The access window may be sufficiently long to comprise a guard period to take account of timing misalignment between the base station 3 and the communication apparatus 1.

The RA burst transmit power applied by the PA 42 may be set at a relatively high level. The level should be high relative to the aggregate power of the TCH. The power plus processing gain of the RA sequence should be sufficient to overcome the (interfering) power of the TCH.

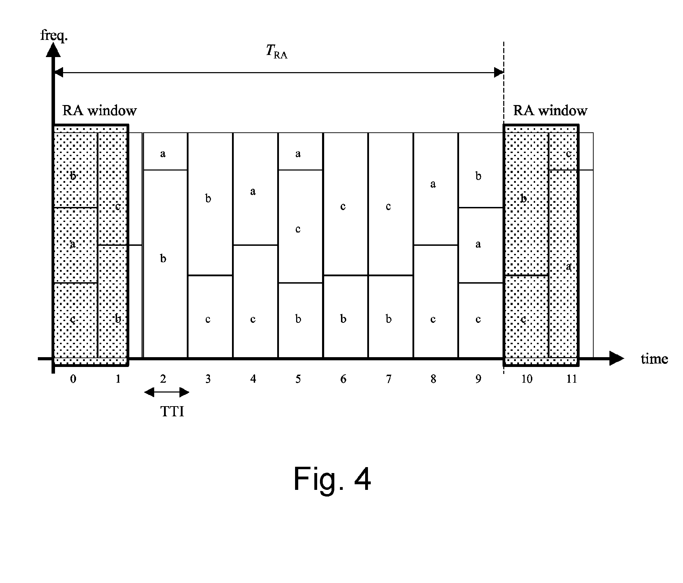

Fig. 4 illustrates a possible uplink scenario in frequency and time. For signals transmitted over the TCHs, sub frames may be defined. The sub frames form time slots, during which uplink TCH frames may be sent over the TCHs. The length of the access window may correspond to one or several sub frames, or portions of sub frames. Thus, the access window need not be an integer of the sub frame. The access window interval is denoted T_{RA}. T_{RA} may e.g. range from tens to hundreds of sub frames. T_{RA} will determine latency at connection setup.

The frequency band of the RACH may fully or partially overlap with the frequency band of the TCHs. The broader frequency band of the RACH, the better the frequency diversity will be. The smaller frequency band for the RACH, the less interference, i.e. no interference is caused for TCHs having frequency bands not overlapping the frequency band of the RACH. Also, partial overlapping also enables a frequency hopping RACH if its frequency band varies from one access instant to another.

Signals may be transmitted over the TCHs in different ways. In one embodiment, users may transmit over the TCHs using the entire frequency band of the TCHs, but only one user per sub frame, which would correspond to TDMA (Time Division Multiple Access). In another embodiment, users may use the entire frequency band of the TCHs and multiple users (indicated by a, b, c in Fig. 4) per sub frame, which would correspond to CDMA (Code Division Multiple Access) or WCDMA. Users may be assigned separated frequency bands for the TCHs but multiple users within each sub frame, which would correspond to FDMA (Frequency Division Multiple Access). Thus, the invention is not limited to WCDMA, but could be implemented in any communication network applying the mentioned access techniques.

The interference cancellation techniques have been described with respect to a single base station 3. However, the technique can also be applied to take into account RA interference from adjacent cells. In particular, when the base stations are time synchronized (not necessarily aligned), a base station and a wireless communication apparatus in one cell can anticipate the interference introduced by RA bursts of adjacent cells.

The access window may be scheduled or determined in relation to the sub frames. For example, in the embodiment of Fig. 4, the access window interval is 10 sub frames. Thus, the timing of the access windows may be determined as starting at sub frame = (0|mod10) and to cover partly sub frame=(1|mod 10). The length of the access window may determine the end time. Alternatively, the access window may be scheduled in relation to a clock or timer value.

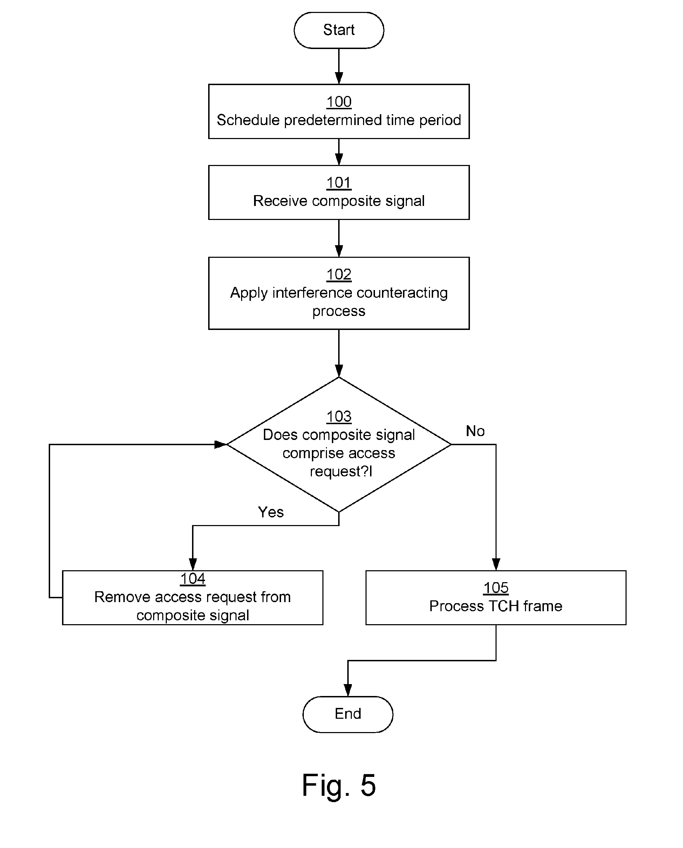

Fig. 5 illustrates an embodiment of a method for communicating at least one signal over a channel of a first channel type and at least one signal over a channel of a second channel type. In a first step 100, the access window is scheduled, such as its start time and end time. In step 101, the composite signal is received, which may comprise one or several signals communicated over the RACH and one or several signals communicated over the TCH. The interference counteracting process is applied in step 102 during the scheduled access window. The interference counteracting process may be applied during the entire access window. Possible details of embodiments of the interference counteracting process are illustrated in the following steps. In step 103, it is determined whether the composite signal comprises any signal communicated over the RACH, i.e. any access request. The determination may be made by a correlation process, as described above. Once the answer in step 103 is yes, the procedure proceeds to step 104. In step 104, the signal communicated over the RACH, i.e. the access request, is removed from the composite signal, e.g. by the processing unit 16 and subtracted by the subtractor 17. When the signal communicated over the RACH has been removed, the procedure returns to step 103. When the composite signal has been searched for any possible signal communicated over the RACH, e.g. all spreading sequences have been utilized in the correlation process, it may be determined that all signals transmitted over the RACH have been removed from the composite signal, i.e. the answer in step 103 is no. Then, the procedure proceeds to step 105, wherein the composite signal may be processed. As all signals transmitted over the RACH have been removed, the composite signal only comprises signals transmitted over the TCHs. Then, the procedure may be ended.

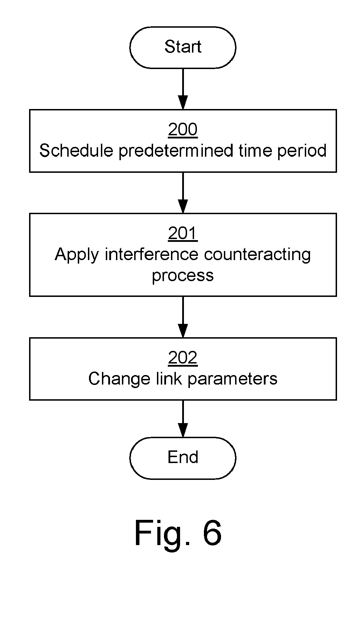

Fig. 6 illustrates another embodiment of a method for communicating at least one signal over a channel of a first channel type and at least one signal over a channel of a second channel type. In a first step, 200, the access window is scheduled, such as its start time and end time. In step 201, the interference counteracting process is applied. In this embodiment, the interference counteracting process is a link adaptation process. In step 202, first link parameter settings are changed to second link parameter settings during the access window to improve the robustness of the TCHs. The link parameters being changed may be at least one of modulation scheme, coding scheme, coding gain, processing gain, and transmit power level, as described above. The method according to Fig. 6 may be implemented in both communication unit 20 or 40, i.e. in both a receiver and a transmitter. However, as a receiver does not comprise any PA, the transmit power may not be changed in communication unit 20.

The invention may be embedded in a computer program product, which enables implementation of the method and functions described herein. The invention may be carried out when the computer program product is loaded and run in a system having computer capabilities. Computer program, software program, program product, or software, in the present context mean any expression, in any programming language, code or notation, of a set of instructions intended to cause a system having a processing capability to perform a particular function directly or after conversion to another language, code or notation.

The present invention has been described above with reference to specific embodiments. However, other embodiments than the above described are possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A method for communicating at least one signal over a channel of a first channel type and at least one signal over a channel of a second channel type, which is different from the first channel type, said channels being channels of a wireless communication system, comprising
scheduling a predetermined time period, during which interference due to simultaneous communication of signals over the channel of the first channel type and the channel of the second channel type is anticipated,
applying, during the predetermined time period, an interference counteracting process for counteracting interference between any signal communicated over the channel of the first channel type and any signal communicated over the channel of the second channel type.

2. The method according to claim 1, wherein the step of scheduling comprises determining a start time and an end time of the predetermined time period.

3. The method according to claim 1 or 2, wherein the interference counteracting process comprises an interference cancellation process.

4. The method according to any of the previous claims, wherein the interference counteracting process comprises
determining whether a received composite signal comprised any signal communicated over the channel of the second channel type; and
removing any signal, which has been communicated over the channel of the second channel type, from the composite signal.

5. The method according to claim 4, wherein the interference counteracting process comprises
applying a correlation process for detecting correlation between the composite signal and a spreading sequence by using at least one spreading sequence dedicated for the communication of signals over the channel of the second channel type;
regenerating a signal based on a spreading sequence, for which correlation was detected, and an associated estimated power level; and
subtracting the regenerated signal from the composite signal.

6. The method according to claim 4 or 5, wherein the interference counteracting process comprises
determining that all signals communicated over the channel of the second channel type have been removed from the composite signal; and
demodulating a TCH frame, which is comprised in a signal communicated over the channel of the first channel type,
wherein the composite signal comprised the signal communicated over the channel of the first channel type.

7. The method according to any of the previous claims, wherein the interference counteracting process comprises a link adaptation process.

8. The method according to claim 1, 2, or 7, wherein the interference counteracting process comprises
changing from first link parameter settings to second link parameter settings for increasing the robustness of channels of the first channel type.

9. The method according to claim 8, wherein the step of changing comprises at least one of
changing from a first modulation scheme to a second modulation scheme during the predetermined time period, said second modulation scheme being more robust than the first modulation scheme;
changing from a first coding scheme to a second coding scheme during the predetermined time period, said second coding scheme being more robust than the first coding scheme;
changing from first settings for coding gain to second settings for coding gain during the predetermined time period, said second coding gain settings adding robustness to the channel of the first channel type;
changing from first settings for processing gain to second settings for processing gain during the predetermined time period, said second processing gain settings adding robustness to the channel of the first channel type; and
changing from a first transmit power level to a second transmit power level, said second transmit power level being higher than the first transmit power level.

10. The method according to any of the previous claims, wherein the step of scheduling comprises scheduling when interference from a base station of at least one cell, which is adjacent a serving cell, is anticipated.

11. A communication unit for communicating at least one signal over a channel of a first channel type and at least one signal over a channel of a second channel type, which is different from the first channel type, said channels being channels of a wireless communication system, comprising
a timer (19, 30, 50) adapted to schedule a predetermined time period, during which interference due to simultaneous communication of signals over the channel of the first channel type and the channel of the second channel type is anticipated, and
a processing unit (16, 29, 49) adapted to apply, during the predetermined time period, an interference counteracting process for counteracting interference between any signal communicated over the channel of the first channel type and any signal communicated over the channel of the second channel type.

12. The communication unit according to claim 11,
wherein the timer (19, 30, 50) is adapted to determine a start time and an end time of the predetermined time period.

13. The communication unit according to claim 11 or 12, wherein the interference counteracting process comprises an interference cancellation process.

14. The communication unit according to claim 11 or 12, wherein the processing unit (16) is adapted to determine whether a received composite signal comprises any signal communicated over the channel of the second channel type; and wherein the communication unit (10) comprises a subtractor (17) adapted to remove any signal, which has been communicated over the channel of the second channel type, from the composite signal.

15. The communication unit according to claim 14,
wherein the processing unit (16) comprises
a correlator (16a) adapted to apply a correlation process to the composite signal for determining correlation between the composite signal and a spreading sequence by using at least one spreading sequence dedicated for communication of signals over the channel of the second channel type; and
a power estimator (16b) adapted to estimate a power level associated with a spreading sequence for which correlation was detected;
wherein the processing unit (16) is adapted to regenerate a signal based on the spreading sequence, for which correlation was detected, and the associated estimated power level, and the subtractor (17) is adapted to subtract the regenerated signal from the composite signal.

16. The communication unit according to claim 14 or 15, wherein the processing unit (16) is adapted to
determine that all signals communicated over the channel of the second channel type have been removed from the composite signal;
wherein the communication unit (10) comprises a demodulator (18) adapted to demodulate a TCH frame, which is comprised in a signal communicated over the channel of the first channel type, said composite signal including the signal communicated over the channel of the first channel type.

17. The communication unit according to any of claims 11 to 16, wherein the interference counteracting process comprises a link adaptation process.

18. The communication unit according to claim 11, 12, or 17, wherein the processing unit (29, 49) is adapted to control a change from first link parameter settings to second link parameter settings for increasing the robustness of channels of the first channel type.

19. The communication unit according to claim 18,
wherein the processing unit (29) is adapted to control at least one of:
a signal demodulator (26) to change from a first modulation scheme to a second modulation scheme during the predetermined time period, said second modulation scheme being more robust than the first modulation scheme;
an FEC decoder (28) to change from a first coding scheme to a second coding scheme during the predetermined time period, said second coding scheme being more robust than the first coding scheme;
the FEC decoder (28) to change from first settings for coding gain to second settings for coding gain during the predetermined time period, said second coding gain settings adding robustness to the channel of the first channel type; and
a de-spreader (27) to change from first settings for processing gain to second settings for processing gain during the predetermined time period, said second processing gain settings adding robustness to the channel of the first channel type.

20. The communication unit according to claim 18,
wherein the processing unit (49) is adapted to control at least one of:
a signal modulator (46) to change from a first modulation scheme to a second modulation scheme during the predetermined time period, said second modulation scheme being more robust than the first modulation scheme;
an FEC encoder (48) to change from a first coding scheme to a second coding scheme during the predetermined time period, said second coding scheme being more robust than the first coding scheme;
the FEC encoder (48) to change from first settings for coding gain to second settings for coding gain during the predetermined time period, said second coding gain settings adding robustness to the channel of the first channel type; and
a spreader (47) to change from first settings for processing gain to second settings for processing gain during the predetermined time period, said second processing gain settings adding robustness to the channel of the first channel type.

21. The communication unit according to claim 18 or 20, wherein the processing unit (49) is adapted to control
a power amplifier (42) to change from a first transmit power level to a second transmit power level, said second transmit power level being higher than the first transmit power level.

22. The communication unit according to any of claims 11 to 21, wherein the timer (19, 30, 50) is adapted to schedule when interference from a base station of at least one cell, which is adjacent a serving cell, is anticipated.

23. A communication device (1, 3) comprising the communication unit (10, 20, 40) according to any of claims 11 to 22.

24. The communication device according to claim 23,
wherein the communication device (1) is a portable or handheld mobile radio communication equipment, a mobile radio terminal, a mobile telephone, a pager, a communicator, an electronic organizer, or a smartphone.

25. The communication apparatus according to claim 23, wherein the communication device is a base station (3).

26. A computer program product comprising computer program code means for executing the method according to any of claims 1 to 10, when said computer program code means are run by an electronic device having computer capabilities.

27. A computer readable medium having stored thereon a computer program product comprising computer program code means for executing the method according to any of claims 1 to 10, when said computer program code means are run by an electronic device having computer capabilities.

## Amended claims

### Amended claims in accordance with Rule 86(2) EPC.

**1.** A method for communicating at least one signal over a channel of a first channel type and at least one signal over a channel of a second channel type, which is different from the first channel type, said channels being channels of a wireless communication system, comprising
scheduling a predetermined time period, during which interference due to simultaneous communication of signals over the channel of the first channel type and the channel of the second channel type is anticipated;
applying, during the predetermined time period, an interference counteracting process for counteracting interference between any signal communicated over the channel of the first channel type and any signal communicated over the channel of the second channel type,
wherein the interference counteracting process comprises changing from first link parameter settings to second link parameter settings for increasing the robustness of channels of the first channel type, and wherein changing from first link parameter settings to second link parameter settings comprises at least one of
changing from a first modulation scheme to a second modulation scheme during the predetermined time period, said second modulation scheme being more robust than the first modulation scheme;
changing from first settings for coding gain to second settings for coding gain during the predetermined time period, said second coding gain settings adding robustness to the channel of the first channel type; and
changing from first settings for processing gain to second settings for processing gain during the predetermined time period, said second processing gain settings adding robustness to the channel of the first channel type.

**2.** The method according to claim 1, wherein the step of scheduling comprises determining a start time and an end time of the predetermined time period.

**3.** The method according to claim 1 or 2, wherein changing from first settings for coding gain to second settings for coding gain comprises
changing from a first coding scheme to a second coding scheme during the predetermined time period, said second coding scheme being more robust than the first coding scheme.

**4.** The method according to any of the previous claims, wherein changing from first settings for processing gain to second settings for processing gain comprises
changing from a first spreading factor to a second spreading factor, the second spreading factor being higher than the first spreading factor.

**5.** The method according to any of the previous claims, wherein the interference counteracting process comprises an interference cancellation process.

**6.** The method according to any of the previous claims, wherein the interference counteracting process comprises
determining whether a received composite signal comprised any signal communicated over the channel of the second channel type; and
removing any signal, which has been communicated over the channel of the second channel type, from the composite signal.

**7.** The method according to claim 6, wherein the interference counteracting process comprises
applying a correlation process for detecting correlation between the composite signal and a spreading sequence by using at least one spreading sequence dedicated for the communication of signals over the channel of the second channel type;
regenerating a signal based on a spreading sequence, for which correlation was detected, and an associated estimated power level; and
subtracting the regenerated signal from the composite signal.

**8.** The method according to claim 6 or 7, wherein the interference counteracting process comprises
determining that all signals communicated over the channel of the second channel type have been removed from the composite signal; and
demodulating a TCH frame, which is comprised in a signal communicated over the channel of the first channel type,
wherein the composite signal comprised the signal communicated over the channel of the first channel type.

**9.** The method according to any of the previous claims, wherein the interference counteracting process comprises
changing from a first transmit power level to a second transmit power level during the predetermined time period, said second transmit power level being higher than the first transmit power level.

**10.** The method according to any of the previous claims, wherein the step of scheduling comprises scheduling when interference from a base station of at least one cell, which is adjacent a serving cell, is anticipated.

**11.** A communication unit for receiving at least one signal over a channel of a first channel type and at least one signal over a channel of a second channel type, which is different from the first channel type, said channels being channels of a wireless communication system, comprising
a timer (19, 30) adapted to schedule a predetermined time period, during which interference due to simultaneous communication of signals over the channel of the first channel type and the channel of the second channel type is anticipated, and
a processing unit (16, 29) adapted to apply, during the predetermined time period, an interference counteracting process for counteracting interference between any signal communicated over the channel of the first channel type and any signal communicated over the channel of the second channel type
wherein the processing unit (16, 29) is adapted to control at least one of
a signal demodulator (26) to change from a first modulation scheme to a second modulation scheme during the predetermined time period, said second modulation scheme being more robust than the first modulation scheme;
an FEC decoder (28) to change from first settings for coding gain to second settings for coding gain during the predetermined time period, said second coding gain settings adding robustness to the channel of the first channel type; and
a de-spreader (27) to change from first settings for processing gain to second settings for processing gain during the predetermined time period, said second processing gain settings adding robustness to the channel of the first channel type.

**12.** The communication unit according to claim 11,
wherein the processing unit (16, 29) is adapted to control the FEC decoder (28) to change from a first coding scheme to a second coding scheme during the predetermined time period, said second coding scheme being more robust than the first coding scheme.

**13.** The communication unit according to claim 11 or 12, wherein the processing unit (16, 29) is adapted to control the de-spreader (27) to change from a first spreading factor to a second spreading factor during the predetermined time period, the second spreading factor being higher than the first spreading factor.

**14.** The communication unit according to any of the claims 11-13, wherein the timer (19, 30) is adapted to determine a start time and an end time of the predetermined time period.

**15.** The communication unit according to any of the claims 11 to 14, wherein the interference counteracting process comprises an interference cancellation process.

**16.** The communication unit according to any of the claims 11 to 14, wherein the processing unit (16) is adapted to determine whether a received composite signal comprises any signal communicated over the channel of the second channel type; and wherein the communication unit (10) comprises a subtractor (17) adapted to remove any signal, which has been communicated over the channel of the second channel type, from the composite signal.

**17.** The communication unit according to claim 16,
wherein the processing unit (16) comprises
a correlator (16a) adapted to apply a correlation process to the composite signal for determining correlation between the composite signal and a spreading sequence by using at least one spreading sequence dedicated for communication of signals over the channel of the second channel type; and
a power estimator (16b) adapted to estimate a power level associated with a spreading sequence for which correlation was detected;
wherein the processing unit (16) is adapted to regenerate a signal based on the spreading sequence, for which correlation was detected, and the associated estimated power level, and the subtractor (17) is adapted to subtract the regenerated signal from the composite signal.

**18.** The communication unit according to claim 16 or 17, wherein the processing unit (16) is adapted to
determine that all signals communicated over the channel of the second channel type have been removed from the composite signal;
wherein the communication unit (10) comprises a demodulator (18) adapted to demodulate a TCH frame, which is comprised in a signal communicated over the channel of the first channel type, said composite signal including the signal communicated over the channel of the first channel type.

**19.** The communication unit according to any of claims 11 to 18, wherein the timer (19, 30) is adapted to schedule when interference from a base station of at least one cell, which is adjacent a serving cell, is anticipated.

**20.** A communication unit for communicating at least one signal over a channel of a first channel type and at least one signal over a channel of a second channel type, which is different from the first channel type, said channels being channels of a wireless communication system, comprising
a timer (50) adapted to schedule a predetermined time period, during which interference due to simultaneous communication of signals over the channel of the first channel type and the channel of the second channel type is anticipated, and
a processing unit (49) adapted to apply, during the predetermined time period, an interference counteracting process for counteracting interference between any signal communicated over the channel of the first channel type and any signal communicated over the channel of the second channel type
wherein the processing unit (49) is adapted to control a change, during the predetermined time period, from a first to a second format for representing information transmitted over the channel of the first channel type, by controlling at least one of
a signal modulator (46) to change from a first modulation scheme to a second modulation scheme during the predetermined time period, said second modulation scheme being more robust than the first modulation scheme;
an FEC encoder (48) to change from first settings for coding gain to second settings for coding gain during the predetermined time period, said second coding gain settings adding robustness to the channel of the first channel type; and
a spreader (47) to change from first settings for processing gain to second settings for processing gain during the predetermined time period, said second processing gain settings adding robustness to the channel of the first channel type.

**21.** The communication unit according to claim 20,
wherein the processing unit (49) is adapted to control the FEC encoder (48) to change from a first coding scheme to a second coding scheme during the predetermined time period, said second coding scheme being more robust than the first coding scheme.

**22.** The communication unit according to claim 20 or 21, wherein the processing unit (49) is adapted to control the spreader (47) to change from a first spreading factor to a second spreading factor during the predetermined time period, the second spreading factor being higher than the first spreading factor.

**23.** The communication unit according to any of the claims 20 to 22, wherein the processing unit (49) is adapted to control
a power amplifier (42) to change from a first transmit power level to a second transmit power level, said second transmit power level being higher than the first transmit power level.

**24.** The communication unit according to any of claims 20 to 23, wherein the timer (50) is adapted to schedule when interference from a base station of at least one cell, which is adjacent a serving cell, is anticipated.

**25.** A communication device (1, 3) comprising the communication unit (10, 20, 40) according to any of claims 11 to 24.

**26.** The communication device according to claim 25,
wherein the communication device (1) is a portable or handheld mobile radio communication equipment, a mobile radio terminal, a mobile telephone, a pager, a communicator, an electronic organizer, or a smartphone.

**27.** The communication device according to claim 24,
wherein the communication device is a base station (3).

**28.** A computer program product comprising computer program code means for executing the method according to any of claims 1 to 10, when said computer program code means are run by an electronic device having computer capabilities.

**29.** A computer readable medium having stored thereon a computer program product comprising computer program code means for executing the method according to any of claims 1 to 10, when said computer program code means are run by an electronic device having computer capabilities.
